# FASCICULE DE BREVET EUROPEEN

(11) **EP 2 747 554 B1**
(45) Date de publication et mention de la délivrance du brevet: **07.10.2015**
(21) Numéro de dépôt: 12748741.1
(22) Date de dépôt: 16.07.2012
(51) Int. Cl.: A01N 25/00, A01N 25/12, A01P 7/04

(54) **PROCÉDÉ DE LUTTE CONTRE LES INSECTES DU SOL**
VERFAHREN ZUR BEKÄMPFUNG VON BODENINSEKTEN
METHOD FOR CONTROLLING SOIL-DWELLING INSECTS

(30) Priorité: 25.08.2011 FR 1102595
(43) Date de publication de la demande: 02.07.2014
(73) Titulaire: SBM DEVELOPPEMENT, 69130 Ecully (FR)
(72) Inventeur: PEYRON, Xavier, F-13011 Marseille (FR)
(74) Mandataire: Santarelli
(86) Numéro de dépôt international: PCT/FR2012/051684
(87) Numéro de publication internationale: WO 2013/026967

(56) Documents cités:
- EP-A1- 0 575 838
- WO-A2-2011/091450
- OLESON J D ET AL: "Seedcorn maggot control, 1995", CROPU,, 1 janvier 1996 (1996-01-01), XP002513393,
- OLESON J D ET AL: "Seedcorn maggot control, 2000", CROPU,, 1 janvier 2001 (2001-01-01), XP002513397,
- DATABASE WPI Week 200966 Thomson Scientific, London, GB; AN 2009-K30088 XP002667527, & CN 101 445 404 A (CHEN F) 3 juin 2009 (2009-06-03)
- DATABASE WPI Week 200869 Thomson Scientific, London, GB; AN 2008-L74928 XP002667528, & CN 101 081 798 A (TIANJIN HANGU DISTRICT FUXIANG FERTILIZER PROCESSING PLANT) 5 décembre 2007 (2007-12-05)
- DATABASE WPI Week 200957 Thomson Scientific, London, GB; AN 2009-K59909 XP002667529, & CN 101 444 267 A (HUNAN XIANGBEI AQUATIC FEED CO LTD) 3 juin 2009 (2009-06-03)

## Description

La présente invention concerne le domaine de l'agriculture, et plus particulièrement l'utilisation en enfouissement d'un appât blanc, pour limiter les attaques d'une culture par des insectes du sol.

Par appât selon l'invention, il est entendu toute forme d'appât, notamment tel que défini dans l'index phytosanitaire ACTA (édition 2010, ACTA Publications). En particulier selon l'invention l'appât peut se présenter sous la forme de granulés appâts (GB), d'appât en plaquette (PB), d'appât prêt à l'emploi (RB), d'appât sur brisures (SB),

Par granulés appâts on entend selon l'invention des granulés pouvant être obtenus par l'agglomération de matière active, de charge et d'agents liants et dispersants, suivi d'un séchage. Les granulés-appâts peuvent être formulés prêts à l'emploi. Ils peuvent être calibrés et présenter une taille homogène pour permettre un épandage régulier de la matière active. La charge peut être une farine (blé, blé dur, etc..).

Par appât blanc, il est entendu un appât ne comprenant pas de matière active insecticide. Par ailleurs dans le texte la composition utilisée selon l'invention est désignée sous la dénomination "appât blanc",

Le terme pesticide, dérivé du mot anglais pest («ravageurs»), désigne les substances ou les préparations utilisées pour la prévention, le contrôle ou l'élimination d'organismes jugés indésirables, qu'il s'agisse de plantes, d'insectes, de champignons ou de bactéries. Dans le langage courant le terme pesticide est généralement associé à un usage agricole de ces substances, or le terme générique englobe également les usages domestiques, urbains (espaces verts par exemple), de voirie...

Il existe principalement trois catégories de pesticides : les herbicides (pour lutter contre les mauvaises herbes), les fongicides (pour lutter contre les champignons) et les insecticides (pour lutter contre les insectes). D'autres produits existent ayant une action sur les rongeurs (rodonticides), sur les escargots et les limaces (molluscicides).

L'utilisation généralisée des pesticides a suivi les progrès de la chimie minérale. Au XIXe siècle, les traitements fongicides sont à base de sulfate de cuivre (dont la célèbre bouillie bordelaise) ou à base de mercure ; les insecticides tels l'arsénite de cuivre, l'acétoarsénite de cuivre, l'arséniate de plomb font aussi leur apparition.

Ensuite, les pesticides profitent très largement du développement de la chimie organique déjà avant la guerre 39-45 ; puis surtout après. C'est à cette époque qu'apparaissent un grand nombre de composés organiques.

L'usage de ces produits a connu un très fort développement au cours des décennies passées, les rendant quasiment indispensables à la plupart des pratiques agricoles, quel que soit le niveau de développement économique des pays. De 1945 à 1985, la consommation de pesticides a doublé tous les dix ans.

Parmi les pesticides, les insecticides sont des substances actives ou des préparations ayant la propriété de tuer les insectes, leurs larves et/ou leurs oeufs. Le terme générique insecticide inclut aussi les pesticides destinés à lutter contre des arthropodes qui ne sont pas des insectes (ex : acariens, araignées ou tiques) ainsi que des répulsifs.

Si les pesticides ont constitué un énorme progrès dans la maîtrise des ressources alimentaires et l'amélioration de la santé publique (en particulier dans la lutte contre les insectes, vecteurs des maladies), le revers de la médaille est apparu rapidement avec des phénomènes de résistance chez les insectes, des modifications de sexes chez certains batraciens et des difficultés de reproduction chez certains invertébrés.

Des contaminations par les pesticides ont été mises en évidence dans tous les compartiments de l'environnement : dans les eaux des rivières et des nappes phréatiques, dans l'air et dans les eaux de pluie. On les rencontre aussi dans les fruits, les légumes, les céréales et les produits d'origine animale (les oeufs, le lait, la viande, le poisson..). Ils existent sous leur forme initiale mais ils peuvent aussi être dégradés, on parle alors de résidus ou de métabolites

Ainsi, bien que les insecticides aient été adoptés, il reste qu'ils engendrent bien des inquiétudes du fait notamment des problèmes environnementaux reliés à leur emploi abusif. Dans la majorité des pays, la mise en vente des insecticides et leur utilisation sont soumises à une autorisation préalable (l'homologation ou autorisation de mise sur le marché) de l'autorité nationale compétente.

L'invention vise à contourner ces problèmes tout en conservant une efficacité certaine à la lutte contre les organismes jugés indésirables dans les cultures.

Il existe des divulgations qui enseignent l'utilisation dans le sol en enfouissement d'appâts qui ne comprennent pas d'insecticide, dans le but d'encourager l'infestation par des insectes ravageurs (Oleson J D et al : « Seedcorn maggot control, 1995 », Arthopod Manage. Tests (26, F32, 2001) et banque de données CROPU (AN 2002-85802) ; Oleson J D et al : « Seedcorn maggot control, 2000 », Arthopod Manage. Tests (21, 222-23, 1996) et banque de données CROPU (AN 1996-87917) ou encore de granulés de zéolithe imprégnés de phéromones, qui ne comprennent pas non plus d'insecticide, appliqués pour protéger les cultures de maïs contre les nuisibles en provoquant une confusion de ceux ci (WO2011/091450).De manière inattendue, les inventeurs se sont rendus compte, lors d'essais en champs, que l'utilisation dans le sol, donc en enfouissement, d'appâts blancs, avait un effet protecteur sur les semences, bien que ne contenant pas d'insecticide. Les inventeurs pensent que cela peut s'expliquer par le fait que les insectes du sol, suite à l'enfouissement de ces appâts sans insecticides dans le sol, sont attirés par lesdits appâts, s'en approchent et les consomment. Ces appâts font donc diversion, occupent les insectes du sol qui, de ce fait, n'endommagent pas les semis. Les appâts blancs servent en fait de leurre, et évitent une attaque des cultures au moment des stades critiques pour le développement de la plante à savoir les temps compris entre le semis (la mise en culture de la semence ), la germination (5 à 10 jours à partir du semis), et la levée (stade de 10 à 20 jours à partir du semis). Il est en effet important, pour obtenir de bons rendements, que la levée soit homogène. Une fois ces stades critiques passés, l'attaque d'une culture par les insectes du sol est moins préjudiciable pour la plante et pour le rendement.

Un intérêt non négligeable de cette technique est qu'elle utilise des appâts d'origine naturelle, et pourrait donc être compatible avec une agriculture dite « biologique ». Cette technique pourrait même permettre à des agriculteurs réalisant une agriculture « biologique » de s'installer dans des terres plus fertiles et moins difficiles que les zones qu'ils utilisent habituellement, qui sont souvent des zones pauvres ou froides, car moins infestées par les insectes.

A la connaissance de la demanderesse, l'utilisation d'un d'appât blanc pour limiter les attaques d'une culture par des insectes du sol n'est pas connue et n'a jamais été proposée.

C'est sur la base de ces résultats que la Demanderesse propose l'utilisation en enfouissement d'un appât blanc, pour limiter les attaques d'une culture par des insectes du sol.

Ainsi l'invention a pour objet une méthode de protection des semis ou des plants contre les ravageurs du sol, caractérisée en ce que l'on utilise dans le sol en enfouissement un appât ne comprenant pas de matière active insecticide (appât blanc), comprenant un support qui est de la farine de blé ou de la farine de son ou encore de la farine de blé dur, de la rafle de maïs, ou encore de la farine de maïs ou de la cellulose ou du papier recyclé, en enfouissement, pour limiter les attaques d'une culture par des insectes du sol

Selon l'invention, l'enfouissement dans le sol peut être réalisé par toute méthode d'enfouissement connue, notamment en enfouissement dans le fond de la raie de semis ou de plantation, en enfouissement sur toute la largeur de la raie de semis ou de plantation dans lequel la semence ou le plant sont placés, ou en enfouissement en plein, c'est-à-dire sur la totalité de la surface cultivable, que ce soit pour des cultures en sillons, en billons, ou autres.

Préférentiellement l'enfouissement pourra être réalisé en enfouissement en plein.

Selon encore l'invention, l'enfouissement pourra être réalisé sur une profondeur comprise entre 1 et 50 cm, avantageusement entre 10 et 15 cm.

Selon l'invention, il est possible d'enfouir l'appât blanc, avant la mise en culture, soit en même temps, éventuellement après. Préférentiellement l'enfouissement de l'appât blanc pourra être réalisé avant la mise en culture.

Par mise en culture selon l'invention, il est entendu le dépôt de la semence ou du plant dans le sol.

Les meilleurs résultats étant obtenus avec un dépôt de l'appât blanc peu de temps avant la mise en culture, le dépôt de l'appât blanc pourra être réalisé entre 5 jours avant et en même temps que la mise en culture, avantageusement entre 1 et 2 jours avant la mise en culture.

Il est notable que si l'enfouissement peut être réalisé de toutes les manières connues, les meilleurs résultats peuvent être obtenus lorsque l'appât blanc est intimement mélangé à la terre. C'est cette forme d'enfouissement qui sera la forme préférée selon l'invention.

Selon l'invention, l'appât blanc peut être utilisé à à peu près n'importe quelle dose. Dans la mesure où il n'apporte aucune matière active il n'est a priori pas nécessaire de prendre de quelconque précaution, sous réserve du profil écotoxicologique des coformulants. C'est en fait une donnée économique qui va présider au choix de la dose, l'utilisateur devant trouver le meilleur rapport qualité/prix entre la dose efficace pour protéger la culture et le coût de la matière utilisée. Avantageusement selon l'invention, l'appât blanc pourra être utilisé à une dose allant de 12 à 100 kg/ha, préférentiellement de 20 à 50 kg/ha, et de façon très préférentielle de 12 kg/ha.

L'appât blanc selon l'invention peut être utilisé contre tout insecte ou parasite du sol pour peu qu'il soit un nuisible de cultures végétales. On peut citer par exemple : le taupin, le vers gris, le vers blanc, la noctuelle terricole, la scutigérelle, l'atomaire, la blaniule, le tipule, l'othiorhynque, les mouches telles la mouche des semis, la mouche du chou, la mouche de la carotte et la mouche de l'oignon ou encore la chrysomèle du maïs. De façon préférentielle l'invention s'adresse à la lutte contre les taupins.

La composition selon l'invention peut être utilisée pour toute culture agricole (céréales, plantes maraichères, plantes horticoles, etc.). Il est entendu que les semences ou les plants, puis les plantes issues des semences, peuvent être protégés par le procédé selon l'invention. De façon préférentielle l'utilisation peut s'appliquer à des cultures de maïs, de colza, de sorgho, de tournesol, de pomme de terre, de betterave, de carotte, de céréales, de choux, de haricot, de melon, de pastèque, de tomate, de poivron, de radis, de poireau, d'artichaut, d'asperge, d'aubergine, de céleri, de salsifis, de navet, de laitue, de mâche, de concombre, de cornichon, de courge, de courgette, d'épinard, de fenouil, de fève, de pois, de lentilles, d'oignon, d'échalote, d'ail, de persil, de légumineuses fourragères, de gazon, de cultures ornementales, de fraise ou encore de tabac. De façon encore plus préférentielle, l'invention peut s'appliquer au maïs.

Toutes les méthodes connues d'enfouissement d'appât peuvent être utilisées selon l'invention.

Préférentiellement, il est possible d'appliquer les appâts blancs selon l'invention à l'aide d'applicateurs de formulations solides. Comme applicateur de formulation solide on citera à titre d'exemple et sans limitation, les épandeurs de granulés ou les petits équipements de dispersion de granules manipulés à la main comme des épandeurs rotatifs par poussée pour traiter de plus petites surfaces. De préférence, une application avec diffuseur pourra être effectuée, le diffuseur pouvant être installé à l'extrémité des tubes de sortie d'un microgranulateur.

Selon l'invention l'appât blanc pourra comprendre un support en une proportion comprise entre 80 et 100%, préférentiellement entre 90% et 99.9%, et de façon très préférentielle entre 97.5% et 99.8% du poids total de l'appât.

Selon l'invention, le support utilisé dans les appâts blancs peut être tout support habituellement utilisé pour la préparation d'appâts, avantageusement par exemple de la farine de blé, de la farine de blé dur, de la farine de maïs, de la farine de son, de la rafle de maïs, de la cellulose, du papier recyclé. Préférentiellement selon l'invention on pourra utiliser de la farine de blé dur ou de la cellulose ou du papier recyclé.

Selon l'invention, l'appât blanc pourra avoir un diamètre compris entre 0,5 et 3 mm, préférentiellement entre 1 et 2 mm, et de façon très préférentielle un diamètre de 1,6 mm.

La densité apparente des appâts blancs revêt de l'importance car elle conditionne le bon épandage de ceux-ci. Ainsi selon l'invention, les appâts blancs pourront avoir une densité apparente comprise entre 0,40 et 1,20, préférentiellement entre 0,60 et 0,90.

Par densité apparente on entend le rapport entre le poids de l'échantillon et le volume dudit échantillon (da=P/V). (YORO G. et GODO G., Cah. ORSTOM, sér. Pédol., vol. XXV, n°4, 1989-1990 : 423-429).

Avantageusement selon l'invention l'appât blanc pourra être petit, ce qui permet d'avoir un nombre de grains au gramme important. Ainsi, le produit pourra être bien réparti dans le sol ce qui augmente son efficacité puisque la probabilité de contact entre l'appât blanc et le ravageur est augmentée.

Ainsi selon l'invention l'appât blanc pourra avoir un nombre de grains au gramme compris entre 250 et 650, préférentiellement compris entre 500 et 600.

L'Homme du métier comprendra aisément que l'appât blanc selon l'invention peut en outre comprendre tout autre composé habituellement utilisé dans cette industrie comme des agents lubrifiants ou des agents d'appétence.

Il est également possible d'ajouter à l'appât blanc selon l'invention d'autres adjuvants tels qu'un agent amérisant, par exemple du benzoate de dénatonium ou encore un agent de répulsion olfactive (afin d'éviter l'ingestion des granulés par les animaux).

Il est également possible d'ajouter à l'appât blanc selon l'invention des conservateurs pour prévenir le développement d'agents contaminants et/ou pathogènes non désirés que peut générer la combinaison humidité/matière organique comme par exemple la formation de moisissures. A cet égard on peut citer par exemple l'acide salicylique ou encore le dinitrophénol. Avantageusement selon l'invention on pourra utiliser de l'acide salicylique.

Comme il est classique dans ce domaine, l'appât blanc selon l'invention pourra comprendre en outre un colorant que l'Homme du métier choisira en fonction de ses contraintes parmi les colorants habituellement utilisés. A titre d'exemple il est possible de citer l'Hostaperm Blue B2G-KR de chez Clariant, qui est un colorant bleu avantageusement utilisé car les oiseaux ne distinguent que très mal cette couleur, ce qui permet d'éviter qu'ils ne soient trop attirés par l'appât.

Les quantités d'adjuvants supplémentaires pouvant être ajoutées à l'appât blanc selon l'invention sont classiques dans le domaine considéré et l'Homme du métier n'aura aucun mal à les ajuster en fonction des contraintes qu'il pourra rencontrer.

Pour obtenir les meilleurs résultats possibles en termes d'efficacité avec l'appât blanc selon l'invention, il est important que lesdits appâts blancs soient parfaitement calibrés et donc très homogènes en taille. Lorsque ce critère est satisfait, cela peut faciliter l'enfouissement dans le sol de l'appât blanc et peut permettre un meilleur contrôle de la dose appliquée. Cependant l'Homme du métier comprend bien évidement que ce critère pour important qu'il est, n'est pas limitatif.

Quand bien même l'appât blanc selon l'invention serait fabriqué par un autre procédé de fabrication que celui que préconise la Demanderesse, il présenterait encore une efficacité largement suffisante justifiant de son emploi.

Le procédé de fabrication d'un appât blanc utilisé dans le cadre de l'invention peut être réalisé par voie sèche, par exemple par compression directe. Une compression directe peut être réalisée par exemple via une presse à filière plate.

Ainsi le procédé de fabrication d'un appât blanc utilisé dans le cadre de l'invention peut comprendre :
- une première étape dans laquelle on prépare un mélange des différents ingrédients de la composition avec le support ;
- une seconde étape dans laquelle on compacte le mélange obtenu à l'étape 1 pour obtenir des granulés ;
- une troisième étape dans laquelle on coupe les granulés obtenus à l'étape 2.

Selon une variante du procédé selon l'invention il est possible de prévoir une quatrième étape, facultative, au cours de laquelle on pourra sécher les granulés obtenus à l'étape 3.

Selon l'invention, si le procédé selon l'invention comprend ladite étape de séchage, alors il est en outre possible de prévoir une cinquième étape au cours de laquelle on pourra refroidir les granulés obtenus à l'étape 4.

Selon une autre variante du procédé selon l'invention, Il est en outre possible de prévoir une étape au cours de laquelle on tamise les granulés, avantageusement refroidis, obtenus soit à l'étape 3 soit à l'étape 4 soit à l'étape 5, dépendamment de la variante du procédé mise en oeuvre, avant une éventuelle étape de conditionnement.

Selon l'invention l'étape 1 du procédé de fabrication de l'appât blanc à pour but d'obtenir une pâte la plus homogène possible.

Selon l'invention, à l'étape 1, de l'eau peut être ajoutée aux ingrédients de la composition dans le mélange, en une quantité juste suffisante pour favoriser la cohésion des particules à granuler entre elles. En effet, contrairement aux procédés de fabrication dit par voie humide et voie vapeur décrits dans la demande internationale n°WO2010/007239 où l'eau est ajoutée en quantité importante afin de créer une pâte à extruder, ici, dans le cas d'un procédé voie sèche, un minimum d'eau est ajouté, pour favoriser la cohésion des particules à granuler entre elles.

Selon l'invention, le mélange de l'étape 1 peut être réalisé par toutes méthodes habituellement utilisées. Avantageusement selon l'invention on pourra utiliser un mélangeur de type Lödige® (Lödige Industries GmbH), ou par extension, tout mélangeur à socs, de façon à obtenir une poudre homogène. De façon moins préférentielle, un mélangeur à rubans pourra également être utilisé.

Le temps de séjour du mélange dans le mélangeur doit permettre d'incorporer l'eau au mélange solide avant de passer à l'étape 2. Ce temps de séjour peut être compris entre 30 secondes et 2 minutes, et préférentiellement égal à 1 minute. Cette étape peut être réalisée dans un pétrin, avantageusement dans un pétrin comportant deux bras d'agitation comme par exemple ceux de la marque Clextral (anciennement AFREM). L'énergie mécanique ajoutée à la chaleur générée par le cisaillement et l'eau apportée permettent de gélatiniser l'amidon et les protéines contenus dans le support et d'obtenir le point de pâte.

Selon une variante de l'invention, certains adjuvants, tels que conservateur ou agent amérisant, pourront être incorporés dans le mélange après dilution préalable dans l'eau. Cela permet de favoriser leur répartition homogène dans la pâte.

Selon une autre variante de l'invention à l'étape 2, le compactage du mélange obtenu à l'étape 1 peut être réalisé par toute méthode connue de l'homme du métier, particulièrement à l'aide de compacteurs du commerce, utilisés selon les spécifications du constructeur.

Selon l'invention, la coupe faisant l'objet de la troisième étape peut être réalisée à l'aide par exemple d'un couteau multi lames, pouvant comprendre de 2 à 8 lames. Ledit couteau peut être placé en sortie de grille, avantageusement à fleur de grille.

La longueur désirée des granulés peut être obtenue en réglant la vitesse de rotation des couteaux. l'Homme du métier n'aura aucun mal à régler la vitesse de rotation des couteaux pour obtenir la longueur désirée pour les granulés qui peut être comprise entre 0,5 et 3 mm, préférentiellement entre 1 et 2 mm.

Selon l'invention, les granulés obtenus à l'étape 3, peuvent être séchés dans une quatrième étape. La cinétique de séchage doit être définie de façon à obtenir des granulés :
- suffisamment durs en surface pour éviter que ceux-ci ne se délitent sous la pluie ;
- suffisamment mous en profondeur afin que ceux-ci restent appétant pour les ravageurs, et faciles à ingérer.

Les granulés humides peuvent traverser un premier sécheur dont le rôle est le séchage de surface afin d'éviter l'agglomération des granulés humides entre eux. Les granulés ainsi "croutés" peuvent traverser ensuite un second sécheur dont l'action se situe en phase viscoélastique (existence d'une température de transition vitreuse de l'amidon "réticulé" dans le réseau protéinique de la farine). A la sortie de ce second sécheur, les granulés sont proches de la transition vitreuse qu'ils franchiront dans un troisième sécheur où la cinétique d'extraction d'eau est ralentie. Chaque sécheur possède huit zones différentes dans lesquelles la température, l'humidité et le temps de séjour sont ajustés et contrôlés afin de gérer la cinétique de séchage.

A titre d'exemple il est possible de mettre en oeuvre le séchage dans les différents sécheurs selon

| | |
|---|---|
| Sécheur 1 : | température comprise entre 40 et 80°C - temps compris entre 3 et 5 min; |
| Sécheur 2 : | température comprise entre 40 et 80°C - temps compris entre 15 et 80 min ; |
| Sécheur 3 : | température comprise entre 40 et 80°C - temps compris entre 15 et 80 min. |

L'humidité finale des granulés est un paramètre important.

Si elle est trop forte, cela va favoriser l'apparition de moisissures dans les granulés, ceux-ci étant principalement constitués de matière organique (farine).

Si elle est trop faible, les granulés seront plus friables et risquent de se casser plus facilement au transport ou à l'application.

De plus, l'humidité des granulés a un impact sur leur densité, et donc sur la dose d'application à l'hectare (un granulé plus humide sera plus lourd, donc à densité égale un nombre moins important de granulés seront appliqués, soit une dose moins importante à l'hectare). Il est donc important que celle-ci soit bien contrôlée.

L'humidité des granulés pourra être comprise entre 8 et 15%, préférentiellement entre 10 et 15%, et de façon très préférentielle entre 12,5 et 14%.

L'humidité, du fait de son impact sur la densité réelle des granulés, a également un impact sur leurs propriétés balistiques et donc sur l'homogénéité de l'épandage.

Selon l'invention il est possible de prévoir une cinquième étape de refroidissement des granulés séchés obtenus à la quatrième étape. Cela pourra permettre d'éviter la condensation de l'air chaud et l'agglomération des granulés entre eux. La température de refroidissement peut être la température ambiante et le temps de séjour dans le refroidisseur peut être compris entre 3 et 5 minutes.

Selon l'invention il est possible de prévoir une sixième étape de tamisage des granulés refroidis obtenus à l'étape 5 afin d'assurer l'absence de fines particules, de brisures et de poussière.

Il est en outre possible, et à n'importe quelle étape du procédé, avantageusement après l'étape de séchage des granulés, la pulvérisation d'un adjuvant liquide destiné par exemple à la répulsion olfactive des animaux susceptibles d'ingérer les granulés.

La conservation des granulés peut se faire par tout mode de stockage habituel par exemple en silos. En général sans que cela soit impératif, il est possible, par exemple après l'étape de tamisage, de conditionner les granulés en sacs de 20 kg ou en caisses de 10kg ou bien encore en CVS (Conteneur Vrac Souple), par exemple sur des lignes automatisées.

L'appât blanc selon l'invention peut être appliqué aux cultures par tout moyen et sous toute forme d'épandage connus de l'Homme du métier, comme par exemple des microgranulateurs fixés sur des outils agricoles portés ou trainés derrière le traceur (rotavators, herses, canadiens, semoirs, etc.).

L'invention a aussi pour objet une méthode de protection des cultures contre les insectes du sol, caractérisée en ce que l'on utilise dans le sol en enfouissement un appât blanc, préférentiellement selon l'une des utilisations selon l'invention.

La présente invention présente les avantages suivants :
- un gain de rendement est obtenu pour l'agriculteur par rapport au rendement observé avec une culture sans protection aucune, du fait de la diminution du nombre de semences ou de plants endommagés ;
- l'application de la composition selon l'invention est, de plus, facile et rapide à mettre en oeuvre ;
- la quantité d'insecticide dispersée dans l'environnement est nulle car aucune matière active insecticide n'est utilisée, ce qui permet de préserver la faune ou la sécurité des personnes, particulièrement celles qui appliquent les appâts.

D'autres caractéristiques de l'invention apparaîtront dans l'exemple qui suit, sans pour autant que celui-ci ne constitue une quelconque limitation de l'invention.

### Exemple 1

### Objectif de l'étude

SBM 07/007 est un insecticide appât à base de cyperméthrine formulé sur des granulés spéciaux ayant pour fonction d'appâter les larves de taupins. Cette expérimentation poursuit 2 axes de recherche :
- Évaluation de l'appétence des granulés : comparaison des plantes attaquées par les taupins en présence de granulés appâts avec / sans insecticide,
- Évaluation du positionnement des granulés appâts selon deux types de diffusion dans la raie de semis (diffusion avec diffuseur DXP) ou appliqués en plein (le produit étant incorporé avant la réalisation du semis).

### • Produits

1) Témoin (aucune application d'appât)
2) 11077 DXP SBM 07/007 à 12,0 kg/ha (cyperméthrine 96 g/ha) - application par diffuseur DXP
3) 11077 avant semis SBM 07/007 à 12,0 kg/ha (cyperméthrine 96 g/ha) - incorporation en plein avant semis
4) 11076DXP SBM 07/007 sans substance active à 12,0 kg/ha - application par diffuseur DXP
5) 11076 avant semis SBM 07/007 sans substance active à 12,0 kg/ha - incorporation en plein avant semis

Pour toutes les modalités, les semences reçoivent une protection fongicide INFLUX XL à 0,1 l/q + GUSTAFSON 42 S à 0,1IJq.

### • Mode d'application des produits

Toutes les modalités ont été semées avec un semoir à double disque (sans soc) de marque MONOSEM (modèle NG+4). Pour les modalités 2 et 4, les granulés sont appliqués dans la raie de semis au moyen d'un diffuseur DXP (fourni avec le produit commercial BELEM 0,8MG) positionné entre les 2 disques de l'élément semeur. Les granulés tombent dans la raie de semis et sont enfouis dans le sol avant le passage des roues plombeuses. Les produits des modalités 3 et 5 sont appliqués sur toute la surface de la micro-parcelle avant semis et incorporés sur les 5 à 10 premiers centimètres de la surface du sol à l'aide d'un motoculteur.

### • Dispositif expérimental

Bloc de FISCHER à 4 répétitions

Parcelles élémentaires de 4 rangs de 10 mètres de long (écartement entre rangs : 0,80 m).

### Surface : 32 m2

### • Résultats

Les résultats sont reportés dans le tableau 1 ci-dessous.

**Tableau 1 : taux de plantes attaquées ou détruites dans les différents essais.**

| Essai | % plantes attaquées ou détruites |
|---|---|
| 1 | 74,7 |
| 2 | 49,2 |
| 3 | 58,2 |
| 4 | 43,3 |
| 5 | 52,1 |

Le taux de plantes attaquées ou détruites sur parcelle témoin augmente rapidement pour atteindre 75% au stade 9 feuilles (1).

Le taux de plantes attaquées ou détruites sur la cyperméthrine formulée sur appâts (SBM 07/007), appliquée avec le diffuseur DXP (2) affiche 49,2 % de plantes attaquées ou détruites au stade 9 feuilles.

Au même stade 9 feuilles, les performances observées pour la formulation appâts sans cyperméthrine montrent un taux de plantes détruites pour la diffusion DXP (4) (43,3% de plantes attaquées ou détruites), ainsi que pour l'incorporation du produit en plein avant semis (5) (52,1% de plantes attaquées ou détruites). Ainsi, dans ces deux types d'application (avec le diffuseur DXP, ou en plein et incorporée avant semis), l'efficacité de l'appât blanc (sans cyperméthrine) est meilleure que celle de l'appât avec cyperméthrine, quel que soit le mode d'application. Il est à noter également que les appâts blancs protègent les plantes, si l'on compare le pourcentage de plantes attaquées ou détruites si l'on utilise des appâts blancs (43.3% et 52,1% selon le mode d'incorporation du produit), par rapport à ce même pourcentage obtenu dans les cultures témoins (75% de plantes attaquées ou détruites).

## Revendications

1. Utilisation d'un d'appât ne comprenant pas de matière active insecticide (appât blanc), comprenant un support qui est de la farine de blé ou de la farine de son ou encore de la farine de blé dur, de la rafle de maïs, ou encore de la farine de maïs ou de la cellulose ou du papier recyclé, en enfouissement, pour limiter les attaques d'une culture par des insectes du sol.

2. Utilisation selon la revendication 1, **caractérisée en ce que** l'appât blanc est appliqué avant la mise en culture, au moment de la mise en culture, ou après la mise en culture,

3. Utilisation selon la revendication 2, **caractérisée en ce que** l'appât blanc est appliqué avant la mise en culture.

4. Utilisation selon l'une des revendications 1 à 3, **caractérisée en ce que** les insectes du sol sont choisis parmi le taupin, le vers gris, le vers blanc, la noctuelle terricole, la scutigérelle, l'atomaire, la blaniule, le tipule, l'othiorhynque, les mouches telles la mouche des semis, la mouche du chou, la mouche de la carotte et la mouche de l'oignon ou encore la chrysomèle du maïs.

5. Utilisation selon la revendication 4, **caractérisée en ce que** l'insecte du sol est le taupin.

6. Utilisation selon l'une des revendications précédentes, **caractérisée en ce que** la culture est une culture de maïs, de colza, de sorgho, de tournesol, de pomme de terre, de betterave, de carotte, de céréales, de choux, de haricot, de melon, de pastèque, de tomate, de poivron, de radis, de poireau, d'artichaut, d'asperge, d'aubergine, de céleri, de salsifis, de navet, de laitue, de mâche, de concombre, de cornichon, de courge, de courgette, d'épinard, de fenouil, de fève, de pois, de lentilles, d'oignon, d'échalote, d'ail, de persil, de légumineuses fourragères, de gazon, de cultures ornementales, de fraise ou encore de tabac.

7. Utilisation selon la revendication 6, **caractérisée en ce que** la culture est une culture de maïs.

8. Utilisation selon l'une quelconque des revendications 1 à 7, **caractérisée en ce que** le support est en une proportion comprise entre 80% et 100% du poids total de l'appât blanc.

9. Utilisation selon la revendication 8, **caractérisée en ce que** le support est en une proportion comprise entre 90% et 99.9% du poids total de l'appât blanc.

10. Utilisation selon l'une des revendications 8 ou 9, **caractérisée en ce que** le support est en une proportion comprise entre 97,5% et 99,8% du poids total de l'appât blanc.

11. Utilisation selon l'une quelconque des revendications 1 à 10, **caractérisée en ce que** l'appât blanc est utilisé à une dose allant de 12 à 100 kg/ha.

12. Utilisation selon lâ revendication 11, **caractérisée en ce que** l'appât blanc est utilisé à une dose allant de 20 à 50 kg/ha.

13. Utilisation selon l'une des revendications 11 ou 12, **caractérisée en ce que** l'appât blanc est utilisé à une dose de 12 kg/ha.

14. Utilisation selon l'une des revendications 1 à 13, dans une méthode de protection d'une culture.

## Patentansprüche

1. Verwendung eines Köders, der keinen aktiven insektiziden Stoff enthält (Blind-Köder), umfassend ein Substrat aus Weizenmehl oder aus Kleiemehl oder auch aus Hartweizenmehl, Maisstängel oder auch aus Maismehl oder aus Cellulose oder recyceltem Papier, durch Vergraben, um Attacken einer Kultur durch Bodeninsekten zu begrenzen.

2. Verwendung nach Anspruch 1, **dadurch gekennzeichnet, dass** der Blind-Köder vor dem Anbau, während des Anbaus oder nach dem Anbau aufgebracht wird.

3. Verwendung nach Anspruch 2, **dadurch gekennzeichnet, dass** der Blind-Köder vor dem Anbau aufgebracht wird.

4. Verwendung nach einem der Ansprüche 1 bis 3, **dadurch gekennzeichnet, dass** die Bodeninsekten ausgewählt sind aus Drahtwurm, Erdraupe, Engerling, erdbewohnendem Eulenfalter, Zwergfüßer, Moosknopfkäfer, getüpfeltem Tausendfuß, Kohlschnakenlarve, Dickmaulrüssler, Fliegen wie der Saatenfliege, der Kohlfliege, der Karottenfliege und der Zwiebelfliege oder auch dem Maiswurzelbohrer.

5. Verwendung nach Anspruch 4, **dadurch gekennzeichnet, dass** das Bodeninsekt der Drahtwurm ist.

6. Verwendung nach einem der vorherigen Ansprüche, **dadurch gekennzeichnet, dass** die Kultur eine Kultur von Mais, Raps, Sorghum, Sonnenblumen, Kartoffeln, Zuckerrüben, Karotten, Getreide, Kohl, Bohnen, Melonen, Wassermelonen, Tomaten, Paprika, Rettich, Lauch, Artischocken, Spargel, Auberginen, Sellerie, Schwarzwurzeln, Rüben, Kopfsalat, Feldsalat, Gurken, Essiggurken, Kürbis, Zucchini, Spinat, Fenchel, Saubohnen, Erbsen, Linsen, Zwiebeln, Schalotten, Knoblauch, Petersilie, Futterleguminosen, Rasen, Zierpflanzen, Erdbeeren oder auch Tabak ist.

7. Verwendung nach Anspruch 6, **dadurch gekennzeichnet, dass** die Kultur eine Maiskultur ist.

8. Verwendung nach einem der Ansprüche 1 bis 7, **dadurch gekennzeichnet, dass** das Substrat in einem Anteil zwischen 80 % und 100 % des Gesamtgewichts des Blind-Köders vorliegt.

9. Verwendung nach Anspruch 8, **dadurch gekennzeichnet, dass** das Substrat in einem Anteil zwischen 90 % und 99,9 % des Gesamtgewichts des Blind-Köders vorliegt.

10. Verwendung nach Anspruch 8 oder 9, **dadurch gekennzeichnet, dass** das Substrat in einem Anteil zwischen 97,5 % und 99,8 % des Gesamtgewichts des Blind-Köders vorliegt.

11. Verwendung nach einem der Ansprüche 1 bis 10, **dadurch gekennzeichnet, dass** der Blind-Köder in einer Dosis von 12 bis 100 kg/ha benutzt wird.

12. Verwendung nach Anspruch 11, **dadurch gekennzeichnet, dass** der Blind-Köder in einer Dosis von 20 bis 50 kg/ha benutzt wird.

13. Verwendung nach Anspruch 11 oder 12, **dadurch gekennzeichnet, dass** der Blind-Köder in einer Dosis von 12 kg/ha benutzt wird.

14. Verwendung nach einem der Ansprüche 1 bis 13 in einem Verfahren zum Schützen einer Kultur.

## Claims

1. Use of a bait that does not comprise an active insecticidal substance (blank bait), comprising a support that is wheat flour or bran flour or also durum wheat flour, maize straw, or also maize flour or cellulose or recycled paper, which is buried, in order to limit attacks on a crop by soil-dwelling insects.

2. Use according to claim 1, **characterized in that** the blank bait is applied before cultivation, at the time of cultivation, or after cultivation.

3. Use according to claim 2, **characterized in that** the blank bait is applied before cultivation.

4. Use according to one of claims 1 to 3, **characterized in that** the soil-dwelling insects are selected from the wireworm, the cutworm, the white grub, the soil-dwelling noctuid, symphylan, the pygmy beetle, the spotted millipede, the cranefly, the otiorhynchus, flies such as the seedcorn fly, the cabbage root fly, the carrot fly and the onion fly or also the corn root worm.

5. Use according to claim 4, **characterized in that** the soil-dwelling insect is the wireworm.

6. Use according to one of the preceding claims, **characterized in that** the crop is a crop of maize, oilseed rape, sorghum, sunflower, potato, beet, carrot, cereals, cabbages, bean, melon, watermelon, tomato, bell pepper, radish, leek, artichoke, asparagus, aubergine, celery, salsify, turnip, lettuce, lamb's lettuce, cucumber, gherkin, squash, courgette, spinach, fennel, broad bean, pea, lentils, onion, shallot, garlic, parsley, leguminous fodder crops, turf, ornamental crops, strawberry or also tobacco.

7. Use according to claim 6, **characterized in that** the crop is a maize crop.

8. Use according to any one of claims 1 to 7, **characterized in that** the support is in a proportion comprised between 80% and 100% of the total weight of the blank bait.

9. Use according to claim 8, **characterized in that** the support is in a proportion comprised between 90% and 99.9% of the total weight of the blank bait.

10. Use according to one of claims 8 or 9, **characterized in that** the support is in a proportion comprised between 97.5% and 99.8% of the total weight of the blank bait.

11. Use according to any one of claims 1 to 10, **characterized in that** the blank bait is used at an application rate ranging from 12 to 100 kg/ha.

12. Use according to claim 11, **characterized in that** the blank bait is used at an application rate ranging from 20 to 50 kg/ha.

13. Use according to one of claims 11 or 12, **characterized in that** the blank bait is used at an application rate of 12 kg/ha.

14. Use according to one of claims 1 to 13, in a crop protection method.
